# EUROPEAN PATENT APPLICATION

(11) **EP 2 556 938 A2**
(43) Date of publication of application: **13.02.2013**
(21) Application number: 12175553.2
(22) Date of filing: 09.07.2012
(51) Int. Cl.: B29C 44/12, B29C 33/12

(54) **Epp foam-forming mold of steering wheel for vehicle**

(30) Priority: 09.08.2011 KR 20110079305
(71) Applicant: Dongshin Industry Inc., Maegok-dong, Buk-gu Ulsan 683-420 (KR)
(72) Inventor: Kim, Gyong Ho, 304-204 Ulsan 689-705 (KR)
(74) Representative: Dr. Weitzel & Partner

(57) **Abstract**

An EPP foam-forming mold (100) of a steering wheel for a vehicle is provided, which includes a core mold (110) provided with a core forming portion (112), a cavity mold (120) provided with a cavity forming portion (122) that is combined with the core forming portion (112), first and second operating portions (114, 124) provided in the core mold and the cavity mold to be movable along a height direction of the core forming portion and the cavity forming portion, and a fixing jig (116) integrally provided on one side surface of the first operating portion to fix a hub core (10) that is seated on the core forming portion.

## Description

### BACKGROUND OF THE INVENTION

### Field of the invention

The present invention relates to an EPP foam-forming mold of a steering wheel for a vehicle, and more particularly to an EPP (Expanded Polypropylene) foam-forming mold of a steering wheel for a vehicle, which can integrally form an EPP material on a hub core inserted into the mold.

### Description of the Prior Art

In general, a steering wheel of a vehicle is mounted on one front end portion of a steering shaft connected to a steering gear, and transfers the rotation rate of the steering wheel to the steering gear through the steering shaft to rotate the wheel.

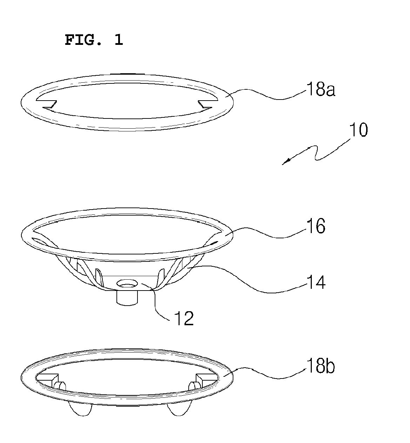

FIG. 1 is an exploded perspective view illustrating a steering wheel for a vehicle in the related art.

Referring to FIG. 1, the related art steering wheel includes a core 10 composed of a hub 12, a spoke 14, and a rim 16, and an EPP foam 18 formed on the outside of the core 10. The EPP foam is composed of an upper foam 18a and a lower foam 18b, which are manufactured through a foam forming process.

Thereafter, the upper foam 18a and the lower foam 18b are assembled with an upper side and a lower side of the rim 16 of the core 10, respectively, to manufacture a steering wheel to which the EPP foam is attached.

As described above, according to the steering wheel for a vehicle in the related art, since the upper foam 18a and the lower foam 18b are separately manufactured, a process of adhering the upper foam 18a and the lower foam 18b is additionally performed to deteriorate the productivity.

Further, if the EPP foam is formed as the upper foam 18a and the lower foam 18b, the formed cross section becomes nonuniform, and thus the adhesives are not uniformly spread. Accordingly, the adhering of the upper foam 18a and the lower foam 18b are not properly performed, and thus the gap between the adhered portions of the formed steering wheel may widen if pressure is applied from the outside thereto.

### SUMMARY OF THE INVENTION

Accordingly, the present invention has been made to solve the above-mentioned problems occurring in the prior art while advantages achieved by the prior art are maintained intact.

One subject to be achieved by the invention is to provide an EPP (Expanded Polypropylene) foam-forming mold of a steering wheel for a vehicle, which can integrally form an EPP material on a hub core, and thus reduce work processes to improve the productivity with the mold manufacturing cost reduced and to improve the uniformity and quality of formed products.

In one aspect of the present invention, there is provided an EPP foam-forming mold of a steering wheel for a vehicle, having a core mold provided with a core forming portion and a cavity mold provided with a cavity forming portion that is combined with the core forming portion, which includes first and second operating portions provided in the core mold and the cavity mold to be movable along a height direction of the core forming portion and the cavity forming portion; and a fixing jig integrally provided on one side surface of the first operating portion to fix a hub core that is seated on the core forming portion.

The EPP foam-forming mold of a steering wheel for a vehicle according to an embodiment of the present invention may further include a plurality of elastic members provided to be spaced apart from one another along a circumferential direction between bottom surfaces of the core mold and the cavity mold and the other side surfaces of the first and second operating portions to elastically support the first and second operating portions.

A plurality of accommodating grooves may be formed to be spaced apart from one another along the circumferential direction on the other side surfaces of the first and second operating portions that are opposite the bottom surfaces of the core mold and the cavity mold so that end portions of the elastic members can be accommodated therein.

End portions of the first and second operating portions may be provided to project longer than end portions of the core forming portion and the cavity forming portion.

A plurality of accommodating grooves or projections may be formed to be spaced apart from one another along the circumferential direction on predetermined positions of the bottom surfaces of the core mold and the cavity mold so that the other end portions of the elastic members can be inserted or accommodated therein.

The EPP foam-forming mold of a steering wheel for a vehicle according to an embodiment of the present invention may further include a plurality of support portions provided to be spaced apart from the fixing jig along a circumferential direction on predetermined positions of the one side surface of the first operating portion.

According to an embodiment of the present invention, since the hub core and the EPP material are integrally formed through formation of surface-fitted parting lines by the first and second operating portions, the productivity is improved with the manufacturing cost reduced through reduction of the work processes, and the uniformity and quality of the formed products can be improved.

### BRIEF DESCRIPTION OF THE DRAWINGS

The above and other objects, features and advantages of the present invention will be more apparent from the following detailed description taken in conjunction with the accompanying drawings, in which:
FIG. 1 is an exploded perspective view illustrating a steering wheel for a vehicle in the related art;
FIG. 2 is a perspective view illustrating an EPP foam-forming mold of a steering wheel for a vehicle according to an embodiment of the present invention;
FIG. 3 is a cross-sectional view schematically illustrating an EPP foam-forming mold of a steering wheel for a vehicle according to an embodiment of the present invention; and
FIGS. 4A and 4B are cross-sectional views schematically illustrating an EPP foam-forming mold of a steering wheel for a vehicle according to another embodiment of the present invention.

### DETAILED DESCRIPTION OF THE PREFERRED EMBODIMENTS

Hereinafter, preferred embodiments of the present invention will be described with reference to the accompanying drawings. In the drawings, thicknesses of lines or sizes of constituent elements may be exaggerated for clarity in explanation.

Further, all terms used in the following description are terms defined in consideration of their functions in the present invention, and may differ depending on user or operator intention or customs. Accordingly, such terms should be defined on the basis of the overall contents of the description.

### Embodiment

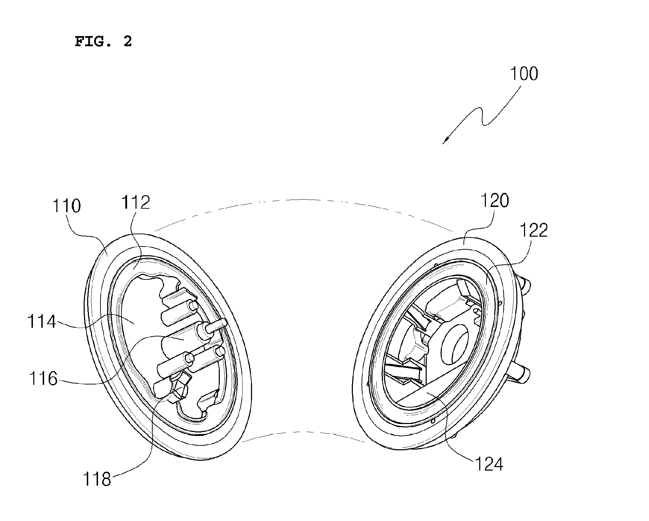

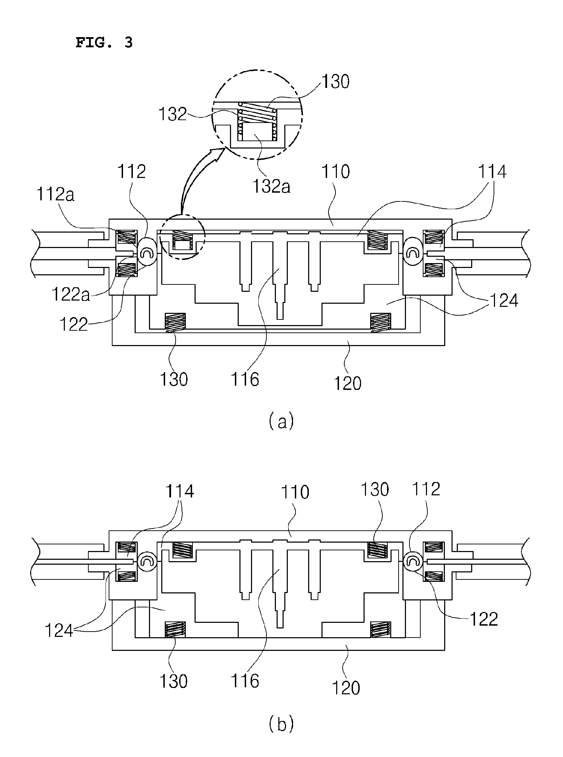

FIG. 2 is a perspective view illustrating an EPP foam-forming mold of a steering wheel for a vehicle according to an embodiment of the present invention, and FIG. 3 is a cross-sectional view schematically illustrating an EPP foam-forming mold of a steering wheel for a vehicle according to an embodiment of the present invention.

An EPP foam-forming mold 100 of a steering wheel for a vehicle according to an embodiment of the present invention is formed on a rim 16 of a hub core 10 to be described later by melting EPP granules filled in a space that is formed by a combination of a core forming portion 112 and a cavity forming portion 122 using high pressure and steam.

Referring to FIG. 1, the hub core 10 includes a hub 12 connected to a steering column of a vehicle, a spoke radially coupled to the circumference of the hub 12, and a circular rim 16 coupled to an end portion of the spoke 14.

Referring to FIGS. 2 and 3, the EPP foam-forming mold 100 of a steering wheel for a vehicle according to an embodiment of the present invention includes a core mold 110 provided with the core forming portion 112 and a cavity mold 120 provided with the cavity forming portion 122 that is combined with the core forming portion 112.

In the core mold 110 and the cavity mold 120, first and second operating portions 114 and 124 are provided to be movable along the height direction of the core forming portion 112 and the cavity forming portion 122.

On one side surface of the first operating portion 114, a fixing jig 116 is integrally provided to fix the hub core 10 that is seated on the core forming portion 112.

Further, a plurality of support portions 118 are provided in predetermined positions of one side surface of the first operating portion 114, that is, to be spaced apart for a predetermined distance from the fixing jig 116, and the support portions 118 is fixed to the fixing jig 116 to support the spoke 14 of the hub core 10 seated on the core forming portion 112.

A plurality of elastic members 130 for elastically support the first and second operating portions 114 and 124 are provided along the circumferential direction of the first and second operating portions 114 and 124 between the bottom surfaces of the core mold 110 and the cavity mold 120 and the other side surfaces of the first and second operating portions 114 and 124 so that the first and second operating portions 114 and 124 are elastically moved along the height direction of the core forming portion 112 and the cavity forming portion 122.

On the other side surfaces of the first and second operating portions 114 and 124, that is, on the other side surfaces that are opposite the bottom surfaces of the core mold 110 and the cavity mold 120, a plurality of accommodating grooves 132 are formed along the circumferential direction of the first and second operating portions 114 and 124 so that end portions of the elastic members 130 can be accommodated therein. The accommodating grooves 132 fix the positions of the elastic members 130 when the first and second operating portions 114 and 124 are elastically moved by the elastic members 130.

Here, it is preferable that projections 132a are formed on the bottom surfaces of the accommodating grooves 132 so that end portions of the elastic members 130 can be inserted therein.

On the other hand, end portions of the first and second operating portions 114 and 124 are provided to project longer than end portions of the core forming portion 112 and the cavity forming portion 122. These end portions form crack fill so that EPP granules are filled with a desired density in the space formed by a combination of the core forming portion 112 and the cavity forming portion 122 when the EEP granules are filled in the formed space, and prevent blades 112a and 122a of the core forming portion 112 and the cavity forming portion 122 from being damaged due to external impacts.

Here, the crack fill is to widen the gap (4 to 10 mm) between the core forming portion 112 and the cavity forming portion 122 and to inject EPP granules into the formed space so that the granule-shaped EPP is filled in the formed space with a desired density.

Further, since the end portions of the first and second operating portions 114 and 124, which are elastically movably provided along the height direction of the core forming portion 112 and the cavity forming portion 122 inside the core mold 110 and the cavity mold 120, become in contact with each other to form the surface-fitted parting lines, the hub core 10 and the EEP material can be integrally formed.

In addition, since the fixing jig 116 for fixing the hub core 10 is integrally coupled to interlock with the first operating portion 114, the rim 16 of the hub core 10 can be positioned in the center of the formed space during forming, and thus the EPP granules can be uniformly formed on the upper and lower portions of the rim 16.

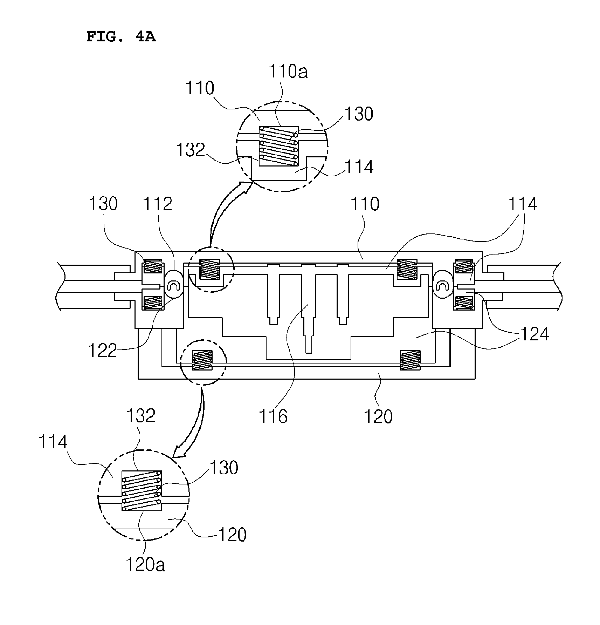

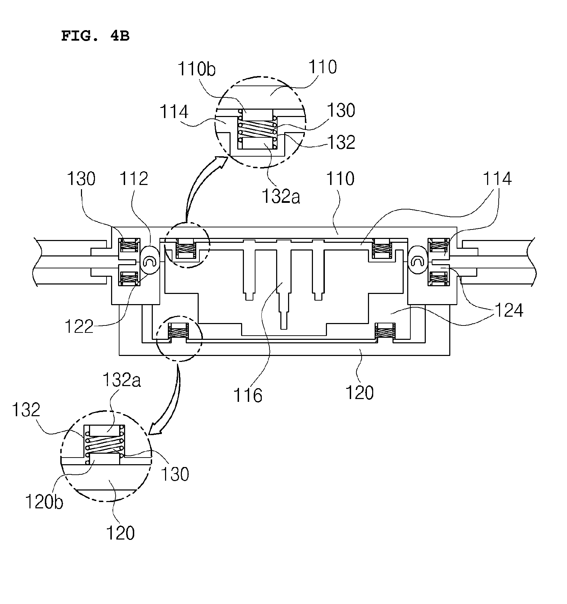

FIGS. 4A and 4B are cross-sectional views schematically illustrating an EPP foam-forming mold of a steering wheel for a vehicle according to another embodiment of the present invention.

Referring to FIGS. 4A and 4B, a plurality of accommodating grooves 110a and 120a or projections 110b and 120b are formed to be spaced apart from each other along the circumferential direction on predetermined positions of the bottom surfaces of the core mold 110 and the cavity mold 120 so that the other end portions of the elastic members 130 can be inserted or accommodated therein, and fix the positions of the elastic member 130.

Hereinafter, the operation of the EPP foam-forming mold of a steering wheel for a vehicle according to an embodiment of the present invention will be described.

First, the hub core 10 is fixed to the fixing jig 116 integrally provided with the first operating portion 114 of the core mold 110, and the hub core 10 is seated on the core forming portion 112.

Thereafter, the cavity mold 120 is moved toward the core mold 110 to make the end portions of the first operating portion 114 and the second operating portion 124 be in contact with each other, and the EPP granules are filled in the space formed by the combination of the core forming portion 112 and the cavity forming portion 122.

After filling the EPP granules in the formed space, the cavity mold 120 is moved again to be combined with the core mold 110, and by pressing the molds while supplying steam into the formed space, the EEP granules filled in the formed space are melted and formed on the circumferential surface of the rim 16 of the hub core 10.

At this time, since the first and second operating portions 114 and 124 are elastically moved into the core mold 110 and the cavity mold 120, and simultaneously end portions of the first and second operating portions 114 and 124 become in contact with each other to form the surface-fitted parting lines, the hub core 10 and the EPP material can be integrally formed.

As described above, according to the EPP foam-forming mold of the steering wheel for the vehicle according to an embodiment of the present invention, since the hub core and the EPP material are integrally formed through formation of surface-fitted parting lines by the first and second operating portions, the productivity is improved with the manufacturing cost reduced through reduction of the work processes, and the uniformity and quality of the formed products can be improved.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. An EPP foam-forming mold of a steering wheel for a vehicle, having a core mold provided with a core forming portion and a cavity mold provided with a cavity forming portion that is combined with the core forming portion, the EPP foam-forming mold comprising:
first and second operating portions provided in the core mold and the cavity mold to be movable along a height direction of the core forming portion and the cavity forming portion; and
a fixing jig integrally provided on one side surface of the first operating portion to fix a hub core that is seated on the core forming portion.

2. The EPP foam-forming mold according to claim 1, further comprising a plurality of elastic members provided to be spaced apart from one another along a circumferential direction between bottom surfaces of the core mold and the cavity mold and the other side surfaces of the first and second operating portions to elastically support the first and second operating portions.

3. The EPP foam-forming mold according to claim 2, wherein a plurality of accommodating grooves are formed to be spaced apart from one another along the circumferential direction on the other side surfaces of the first and second operating portions that are opposite the bottom surfaces of the core mold and the cavity mold so that end portions of the elastic members can be accommodated therein.

4. The EPP foam-forming mold according to claim 1, wherein end portions of the first and second operating portions are provided to project longer than end portions of the core forming portion and the cavity forming portion.

5. The EPP foam-forming mold according to claim 2, wherein a plurality of accommodating grooves or projections are formed to be spaced apart from one another along the circumferential direction on predetermined positions of the bottom surfaces of the core mold and the cavity mold so that the other end portions of the elastic members can be inserted or accommodated therein.

6. The EPP foam-forming mold according to claim 1, further comprising a plurality of support portions provided to be spaced apart from the fixing jig along a circumferential direction on predetermined positions of the one side surface of the first operating portion.
